Europäisches Patentamt

European Patent Office

Office européen des brevets

(11) Publication number: **0 156 104**
**B1**

# EUROPEAN PATENT SPECIFICATION

(45) Date of publication of patent specification: **04.10.89**

(51) Int. Cl.⁴: **F 16 B 17/00,** F 16 D 1/00,
F 16 C 35/073

(21) Application number: **85100347.5**

(22) Date of filing: **15.01.85**

(54) A device for fastening a machine element.

(30) Priority: **01.03.84 SE 8401126**

(43) Date of publication of application:
**02.10.85 Bulletin 85/40**

(45) Publication of the grant of the patent:
**04.10.89 Bulletin 89/40**

(84) Designated Contracting States:
**DE FR GB IT**

(56) References cited:
AT-B- 359 783
DE-B-2 751 540
DE-C-2 904 003
DE-C-3 001 998
GB-A-2 063 422

**Konstruktionselemente des Maschinenbaues,
Teil 2, S. 88, Springer Verlag, 1979**

(73) Proprietor: **SKF Nova AB**
**S-415 50 Göteborg (SE)**

(72) Inventor: **Lundgren, Bengt**
**Carin Bielkes Väg 9**
**S-443 00 Lerum (SE)**

(74) Representative: **Kristiansen, Alf P.**
**Aktiebolaget SKF Patent Department**
**S-415 50 Göteborg (SE)**

Courier Press, Leamington Spa, England.

EP 0 156 104 B1

## Description

The invention relates to a device of the kind defined in the introductory portion of claim 1.

Such devices are known for example from SE—A—429993 (and GB—A—2063422) and are commonly used for affixing for example bearings to shafts. A clamping force is thereby established by axial displacement of the inner ring of the bearing, or of a sleeve arranged therein, the sleeve or the ring having a tapered bore, along a sleeve which has a corresponding tapered outer surface. The bearing ring is thereby clamped against the sleeve, which is simultaneously clamped against the shaft. The axial displacement is usually brought about by tightening a nut or a number of screws against an end plane of the ring.

Devices of this kind have some disadvantages. For example, the bearing ring is moved axially in relation to the shaft during the clamping procedure, which means that the position of the bearing, when mounted to the shaft, becomes indetermined. Further, the internal play of the bearing is changed during the clamping procedure, which causes a temperature rise in the bearing in operation and also impairs the bearing characteristics in other respects.

The purpose of the present invention is to provide a device of the above type in which the disadvantages mentioned above are avoided. This is achieved by giving the device the characterizing features defined in claim 1.

Fastening and unfastening can be brought about very easily with such a device, and the machine elements to be fastened do not need to be specially designed.

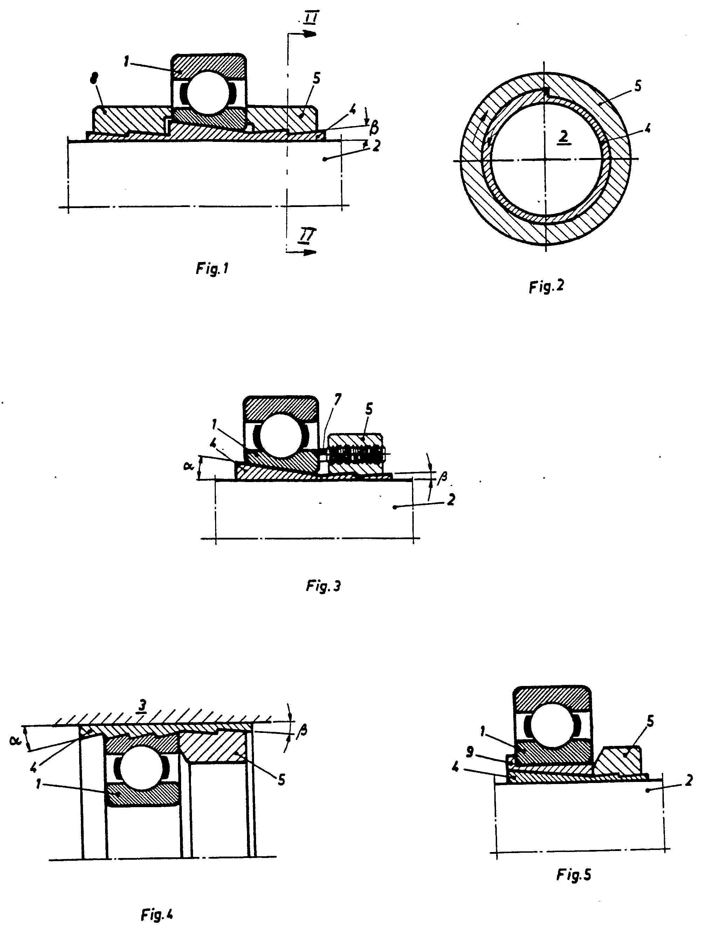

The following is a detailed description of the invention with reference to the accompanying drawing, in which Figs. 1, 3, 4 and 5 show axial sections of devices according to different embodiments of the invention for fastening bearings to shafts and in bores, and Fig. 2 shows a cross section in the plane II—II in Fig. 1.

Corresponding elements are given the same reference numeral in the various figures.

A machine element, here exemplified by a bearing 1, is fixed to a shaft 2 (Figs. 1, 3, 5) or in a bore in a surrounding element (Fig. 4). The fastening device comprises a clamping sleeve 4 which is enclosed by, or encloses, the machine element 1. An annular member 5 is arranged around the sleeve 4 and can be displaced on it so that the sleeve is clamped radially. An end surface of the machine element 1 takes up an axial force which is exerted during the clamping procedure. The surface portions of the sleeve and the annular member 5 which are intended for contacting each other have wedge shaped profiles, and corresponding surface portions of the sleeve and the machine element have such a shape that no appreciable relative axial displacement occurs between the sleeve and the machine element when said axial force is exerted.

This can be achieved in many different ways.

According to the embodiment of Fig. 1, the machine element 1 has a conical bore arranged on a corresponding conical seat on a sleeve 4. Fastening can be carried out by squeezing the machine element 1 on to the cone by tightening a nut 5.

The nut 5 has a threaded bore arranged on a corresponding threaded portion of the sleeve 4, the thread suitably having a great pitch, e.g. 0,5—1 times the axial extension of the nut, one of the thread flanks defining a relatively small angle $\beta$ with the sleeve axis. When the nut 5 is turned, it is pressed axially against the machine element 1. The clamping procedure is described in detail below in connection with the description of the embodiment in Fig. 3.

In order to dismount the joint, the sleeve may be provided with a threaded portion adjacent the large end of the conical portion which is enclosed by machine element 1, a second nut 8 corresponding to nut 5 being provided on this threaded portion. This nut 8 can be used for enhancing the clamping force of the sleeve 4 against a shaft if the nut is tightened against the machine element 1 after the machine element 1 has been secured to the enclosed cone by the nut 5, whereby both nuts are used for clamping the sleeve without the machine element 1 being moved axially in relation to the sleeve 4.

The nuts 5 and 8 can be hydraulic nuts, known per se, comprising an axially movable annular piston, the nut threads being modified according to what has been described with reference to Fig. 2.

Fig. 3 shows how the machine element 1 can be kept in position on the sleeve 4 by the fact that the bore of the machine element 1 and the surface portions of the sleeve 4 intended for contacting the machine element have wedge-shaped axial section profiles, the wedge angle $\alpha$ thereby being greater than the wedge angle $\beta$ of the surface portion of the sleeve 4 which contacts the annular member 5. The portion which defines the angle $\alpha$ is a conical portion similar to that shown in Fig. 1, and the portion which defines the angle $\beta$ can be designed according to Fig. 1 or be a plurality of conical portions arranged in sequence, on which portions is arranged an annular member 5 with a corresponding bore. A number of axial screws 7 arranged in threaded bores in the annular member 5 and abutting machine element 1 are used for bringing about the displacement required for squeezing the member 5 upon the cones with the angle $\beta$, thereby fixing the sleeve 4 to the shaft 2. The machine element 1 is fixed by the reactive force from the screws 7 against the conical portion with the angle $\alpha$ on the sleeve, whereby because of the fact that the angle $\alpha$ is relatively great, no great radial force component is obtained in the contact between the machine element 1 and the sleeve 4, and no appreciable axial displacement of the machine element 1 on the sleeve 4 occurs.

During clamping, the corresponding thread flanks on the member 5 and the sleeve 4 act as mainly circular wedges. Fig. 2 shows a section perpendicular to the axis of the sleeve thread according to Fig. 1. When the nut 5 is turned without axial motion on the co-operating thread, the thread flank of the nut will climb tangentially up the circular wedge defined by the thread flank profile of the sleeve 4 in the cross section of Fig. 2, the wedge angle of which being much smaller than the flank angle of the thread in an axial section. If the flank angle in the axial section corresponds to a conicity of 1:12, which is common for tapered clamping sleeves for fastening of rolling bearings, then the wedge angle of the circular wedge, when evoluted in a plane, provided the thread pitch is 10 mm, is such that it corresponds to a conicity of 1:100—1:400 for the most common bearing sizes. This means that considerable wedging forces against the shaft are obtained under the nut already when a moderate torque is applied to the nut, and that the axial motion of the bearing inner ring is comparatively small because a comparatively small axial force is exerted and the clamping sleeve has a comparatively great cone angle under the bearing 1. The shape of the cross section of the sleeve threads as shown in Fig. 2 entails that the nut 5 will get a slightly oval shape when tightened, and the nut will thus act as a radially resilient spring. Because of the very small wedge angle of the circular wedge and the resiliency of the oval nut, the nut is self-locking and does not have to be secured by locking washers, which constitutes another advantage of the described system.

The clamping surfaces, the profiles of which are shown in Fig. 2 may possibly be cylindrical, i.e. they may not necessarily have a thread shape, whereby no axial movement of the member 5 takes place when the member is turned on the sleeve. The sleeve is thereby only clamped radially because of the spiral shape of the cross section of the clamping surfaces. Axial forces can thereby be brought about by means of axially directed screws, as shown in Fig. 3.

Fig. 4 shows an embodiment of the invention in the shape of a device for fastening an outer ring of a rolling bearing in a bore of a surrounding element 3, e.g. a bearing housing. The wedged portions of the sleeve 4 are herewith situated in the bore of the sleeve. The member 5 can be a nut with an external thread with a saw tooth profile having a wedge angle β corresponding to the embodiment of Fig. 1, whereas the envelope surface of the outer ring of the bearing 1 can be provided with a thread with a saw tooth profile having a wedge angle α, or have a number of conical portions with a cone angle 2α, the sleeve 4 having a corresponding shape.

Fig. 5 shows that also double clamping sleeves 4, 9 can be used in the present invention. This gives the advantage that the machine element 1 can have a cylindrical bore but still can be clamped radially to a press fit. The machine element 1 may thereby be a standard ball bearing.

## Claims

1. A device for fastening a first machine element (1) to the annular surface of a second machine element (2, 3), comprising a clamping sleeve (4) having a first portion confronting and disposed between the first machine element and the annular surface and being provided with first wedge-shaped profiles, and a second sleeve portion outboard thereof, an annular member (5) concentric and movable relative to said second sleeve portion and engageable with said first machine element and cooperable with second wedge-shaped profiles on said second sleeve portion to exert an axial force between said first machine element and said annular member and to exert a seating force to secure said clamping sleeve to said second machine element, characterized in that the wedge angle (β) of said second wedge-shaped profiles is smaller than the wedge angle (α) of said first wedge-shaped profiles on said first sleeve portion so as to ensure that no appreciable axial displacement occurs between the clamping sleeve (4) and the first machine element (1) when said seating force is exerted.

2. A device according to claim 1, wherein the first machine element (1) is arranged on a conical seat on the clamping sleeve (4) and a nut (8) is arranged on a threaded portion thereon adjacent the large end of the cone of the clamping sleeve, the thread of the nut (8) and the clamping sleeve (4) having a great pitch and a small flank angle.

## Patentansprüche

1. Einrichtung zum Befestigen eines ersten Maschinenelementes (1) auf der ringförmigen Oberfläche eines zweiten Maschinenelementes (2, 3) beinhaltend eine Klemmhülse (4) mit einem ersten Abschnitt, welcher zwischen dem ersten Maschinenelement und der ringförmigen Oberfläche anstößt und angeordnet ist und welcher mit ersten keilförmigen Profilen versehen ist, und mit einem nach außen daran anschließenden zweiten Abschnitt, sowie ein Ringelement (5), welches relativ zum besagten zweiten Hülsenabschnitt konzentrisch angeordnet und beweglich ist und welches mit zweiten keilförmigen Profilen des besagten zweiten Hülsenabschnittes in Wirkverbindung bringbar ist, so daß eine Axialkraft zwischen dem besagten ersten Maschinenelement und dem besagten Ringelement ausgeübt wird und eine Sitzkraft entsteht, welche die besagte Klemmhülse auf dem besagten zweiten Maschinenelement festsetzt, dadurch gekennzeichnet, daß der Keilwinkel (β) der zweiten keilförmigen Profile kleiner als der Keilwinkel (α) der ersten keilförmigen Profile des ersten Hülsenabschnittes ist, so daß keine wesentliche axiale Verschiebung zwischen der Klemmhülse (4) und dem ersten Maschinenelement (1) erfolgt, wenn die besagte Kraft ausgeübt wird.

2. Eine Einrichtung nach Anspruch 1, bei welcher das erste Maschinenelement (1) auf einer kegeligen Sitzfläche der Klemmhülse (4) angeordnet und eine Mutter (8) auf einem Gewindeabschnitt dieser Klemmhülse anschließend am dikken Ende des Kegels der Klemmhülse aufgebracht ist, wobei das Gewinde der Mutter (8) und der Klemmhülse (4) eine große Steigung und einen kleinen Flankenwinkel aufweist.

**Revendications**

1. Dispositif pour fixer un premier élément de machine (1) sur la surface annulaire d'un second élément de machine (2, 3), comprenant un manchon de serrage (4) ayant une première portion se trouvant en face et disposée entre le premier élément de machine et la surface annulaire et étant munie de premiers profils en forme de coins, et une seconde portion extérieure, et un organe annulaire (5) concentrique et mobile par rapport à la deuxième portion du manchon et pouvant venir en contact avec ledit premier élément de machine et coopérer avec les seconds profils en forme de coins sur ladite seconde portion du manchon pour exercer un effort axial entre ledit premier élément de machine et ledit organe annulaire et pour exercer un effort de serrage destiné à immobiliser ledit manchon de serrage sur ledit second élément de machine caractérisé en ce que, l'angle de coin (β) des dits seconds profils est plus petit que l'angle de coin (α) des dits premiers profils sur ladite première portion de manchon de façon à garantir qu'il ne se produit pas de déplacement axial appréciable entre le manchon de serrage (4) et le premier élément de machine (1) lorsque s'exerce ledit effort de serrage.

2. Dispositif selon revendication 1, caractérisé en ce que le premier élément de machine (1) est disposé sur une portée conique sur le manchon de serrage (4) et un écrou (8) est disposé sur une portion filetée du manchon adjacente à la grande face du cône du manchon de serrage, le filetage de l'écrou (8) et du manchon de serrage (4) ayant un grand pas et un petit angle de flanc de filet.

Fig.1

Fig.2

Fig.3

Fig.4

Fig.5